# EUROPEAN PATENT SPECIFICATION

(11) **EP 4 586 554 B1**
(45) Date of publication and mention of the grant of the patent: **14.10.2026**
(21) Application number: 25176166.4
(22) Date of filing: 25.06.2021
(51) Int. Cl.: H04W 12/08, H04L 9/40

(54) **SERVICE REQUEST HANDLING**
HANDHABUNG VON DIENSTANFRAGEN
GESTION DE DEMANDE DE SERVICE

(30) Priority: 31.07.2020 EP 20382711
(43) Date of publication of application: 16.07.2025
(62) Document number(s) of the earlier application(s) in accordance with Art. 76 EPC: 21735966.0 / 4 189 997
(73) Proprietor: Telefonaktiebolaget LM Ericsson (publ), 164 83 Stockholm (SE)
(72) Inventor: BARTOLOME RODRIGO, Maria Cruz, 28038 Madrid (ES); HALLENSTAL, Magnus, SE 187 50 Täby (SE)
(74) Representative: Ericsson

(56) References cited:
- "3rd Generation Partnership Project; Technical Specification Group Services and System Aspects; Security Aspects; Study on security aspects of the 5G Service Based Architecture (SBA) (Release 16)", no. V16.0.0, 8 July 2020 (2020-07-08), pages 1 - 104, XP051924305, Retrieved from the Internet <URL:ftp://ftp.3gpp.org/Specs/archive/33_series/33.855/33855-g00.zip 33855-g00.doc> [retrieved on 20200708]
- HUAWEI ET AL: "Authorization of NF service access", vol. SA WG3, no. Reno (US); 20171127 - 20171201, 20 November 2017 (2017-11-20), XP051380509, Retrieved from the Internet <URL:http://www.3gpp.org/ftp/tsg%5Fsa/WG3%5FSecurity/TSGS3%5F89%5FReno/Docs/> [retrieved on 20171120]
- "3rd Generation Partnership Project; Technical Specification Group Core Network and Terminals; 5G System; Network Function Repository Services; Stage 3 (Release 16)", 7 July 2020 (2020-07-07), XP051907034, Retrieved from the Internet <URL:https://ftp.3gpp.org/3guInternal/3GPP_ultimate_versions_to_be_transposed/sentToDpc/29510-g40.zip 29510-g40.docx> [retrieved on 20200707]

## Description

### Technical Field

The disclosure relates to methods for handling a service request in a network and nodes configured to operate in accordance with those methods.

### Background

There exist various techniques for handling a request for a service in a network. A service request is generally from a consumer of the service ("service consumer") to a producer of the service ("service producer"). For example, a service request may be from a network function (NF) node of a service consumer to an NF node of a service producer. The NF node of the service consumer (NFc) and the NF node of the service producer (NFp) can communicate directly or indirectly. This is referred to as direct communication and indirect communication respectively. In the case of indirect communication, the NF node of the service consumer and the NF node of the service producer may communicate via a service communication proxy (SCP) node.

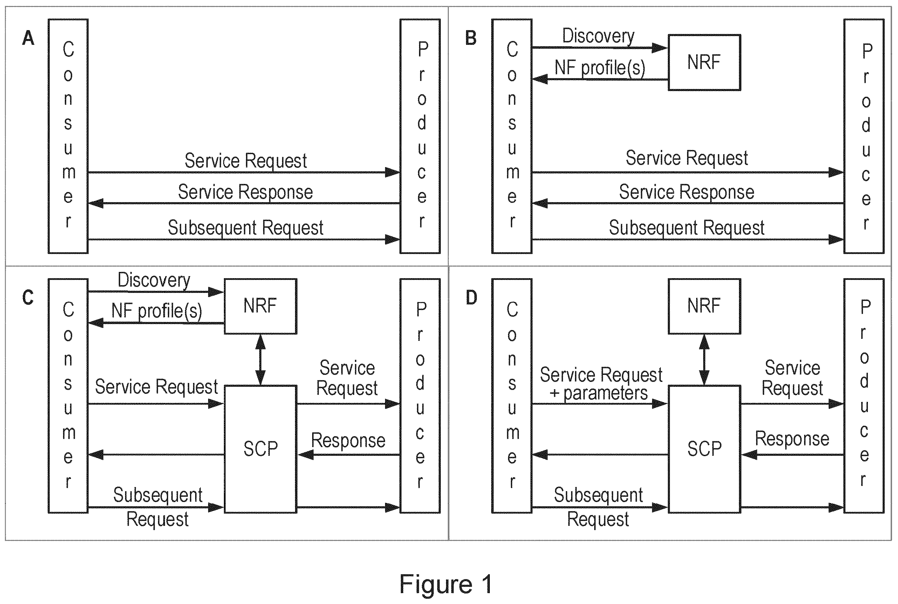

Figure **1A-D** illustrates different existing systems for handling service requests, as set out in 3GPP TS 23.501 v16.5.0 (available at https://portal.3gpp.org/ desktopmodules/Specifications/SpecificationDetails.aspx?specificationId=3144 as of 27 July 2020). In more detail, Figure 1A and 1B illustrates a system that uses direct communication, while Figure 1C and 1D illustrates a system that uses indirect communication.

In the systems illustrated in Figure 1A and 1B, a service request is sent directly from the NF node of the service consumer to the NF node of the service producer. A response to the service request is sent directly from the NF node of the service producer to the NF node of the service consumer. Similarly, any subsequent service requests are sent directly from the NF node of the service consumer to the NF node of the service producer. The system illustrated in Figure 1B also comprises a network repository function (NRF). Thus, in the system illustrated in Figure 1B, the NF node of the consumer can query the NRF to discover suitable NF nodes of the service producer to which to send the service request. In response to such a query, the NF node of the consumer can receive an NF profile for one or more NF nodes of the service producer and, based on the received NF profile(s) can select an NF node of the service producer to which to send the service request. In the system illustrated in Figure 1A, the NRF is not used and instead the NF node of the consumer may be configured with the NF profile(s) of the NF node(s) of the service producer.

In the systems illustrated in Figure 1C and 1D, a service request is sent indirectly from the NF node of the service consumer to the NF node of the service producer via a service communication proxy (SCP) node. A response to the service request is sent indirectly from the NF node of the service producer to the NF node of the service consumer via the SCP. Similarly, any subsequent service requests are sent indirectly from the NF node of the service consumer to the NF node of the service producer via the SCP. The systems illustrated in Figure 1C and D also comprise an NRF.

In the system illustrated in Figure 1C, the NF node of the consumer can query the NRF to discover suitable NF nodes of the service producer to which to send the service request. In response to such a query, the NF node of the consumer can receive an NF profile for one or more NF nodes of the service producer and, based on the received NF profile(s) can select an NF node of the service producer to which to send the service request. In this case, the service request sent from the NF node of the service consumer to the SCP comprises the address of the selected NF node of the service producer. The NF node of the service consumer can forward the service request without performing any further discovery or selection. In case the selected NF node of the service producer is not accessible for any reason, it may be up to the NF node of the service consumer to find an alternative. In other cases, the SCP may communicate with the NRF to acquire selection parameters (e.g. location, capacity, etc.) and the SCP may select an NF node of the service producer to which to send the service request.

In the system illustrated in Figure 1D, the NF node of the consumer (NFc) does not carry out the discovery or selection process. Instead, the NF node of the consumer may add any necessary discovery and selection parameters (required to find a suitable NF node of the service producer, NFp) to the service request that it sends via the SCP. The SCP may then use the request address and the discovery and selection parameters in the service request to route the service request to a suitable NF node of the service producer. The SCP can perform discovery with the NRF. The NF node of the consumer may also include a client credentials assertion in the service request, to be used by the SCP in authorisation processes. Client credentials assertions are tokens signed by the NF node of the consumer, that enable the NF node of the consumer to authenticate towards the receiving end point (NRF, NF node of a producer) by including the signed token in a service request. The use of client credentials assertions is discussed in 3GPP TS 33.501 v 16.3.0 (available at https://portal. 3gpp.org/desktopmodules /Specifications/SpecificationDetails.aspx?specificationld=3169 as of 27 July 2020), particularly in section 13.3.1.2.

For the fifth generation core (5GC), from Release 16, the SCP is included as a network element to allow indirect communication between an NF node of a service consumer and an NF node of a service producer. The indirect communication that is used can be either of the two indirect communications options described earlier with reference to Figure 1C and 1D.

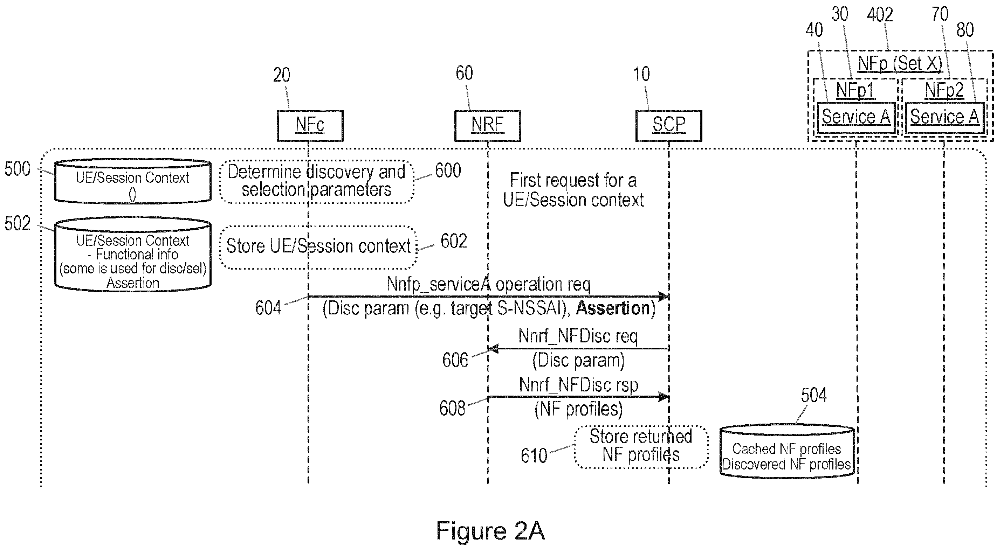

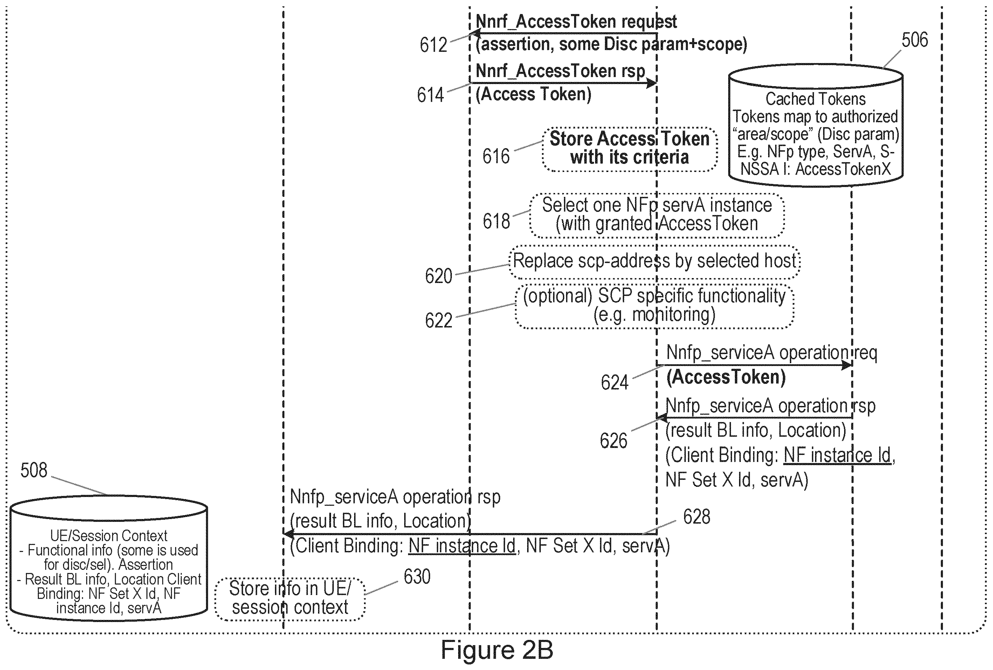

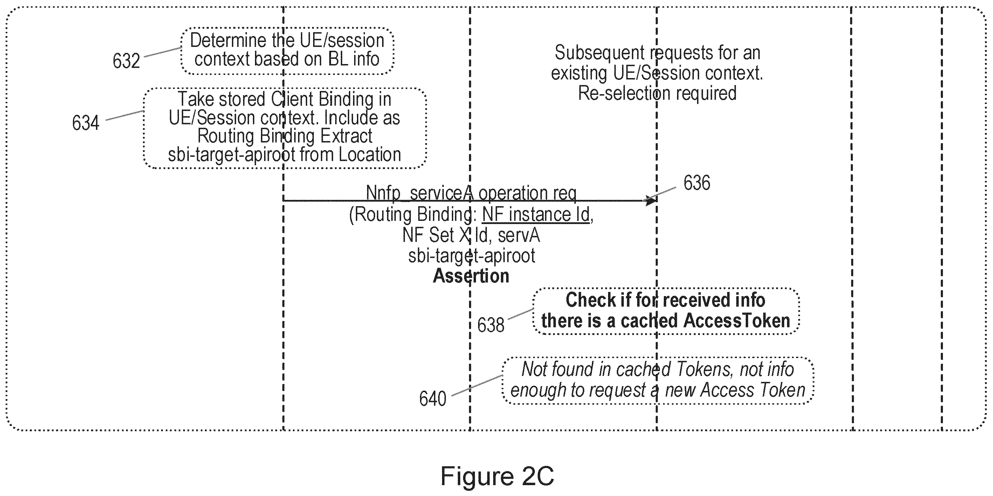

**Figure 2A-C** is a signalling diagram illustrating an exchange of signals in an existing system, such as the system illustrated in Figure 1D. The system illustrated in Figure 2A-C comprises a first SCP node 10, a first NF node 20 of a service consumer ("NFc"), a second NF node 30 of a service producer ("NFp1"), and a third NF node 70 of a service producer ("NFp2"). The first SCP node 10 is configured to operate as an SCP between the first NF node 20 and the second NF node 30. The second NF node 30 can be configured to run a service 40 and the third NF node 70 can be configured to run a service 80. The second NF node 30 and the third NF node 70 can be configured to run the same service or a different service. The second NF node 30 and the third NF node 70 can be part of a set 402 of NF nodes of a service producer. The system illustrated in Figure 2A-C also comprises a network repository function 60.

In Figure 2A-C, steps 600-630 relate to a first request for a user equipment (UE)/session context. As illustrated by block 500 of Figure 2A-C, the UE/session context may be stored. In more detail, as illustrated by block 600 of Figure 2A-C, the first NF node 20 determines what discovery and selection parameters to use. The parameters can be associated with a certain service in a received request, which is not illustrated in Figure 2A-C. As illustrated by blocks 502 and 602 of Figure 2A-C, the first NF node 20 stores the UE/session context for the request. This storage may be cached or externally stored.

As illustrated by arrow 604 of Figure 2A-C, the first NF node (NFc) 20 initiates transmission of a discovery request to the first SCP node 10. The discovery request includes a client credentials assertion, which provides information that validates the client and which can be used by the first SCP to obtain an access token on behalf of the first NF node 20. The first SCP node 10 uses the discovery request to obtain NF profile(s) of one or more NF nodes of the service producer (NFp)_for the service that needs to be executed from the NRF 60 (see arrows 606 and 608). As illustrated by blocks 504 and 610 of Figure 2A-C, the first SCP node 10 can store the discovery results (the returned NF profile(s)).

As illustrated by arrow 612, the first SCP node 10 sends an access token request to the NRF 60. The access token request includes some of parameters from the discovery parameters received in the request (see arrow 604) and may also include other information from the first SCP node 10 such as the scope (one or multiple services). Which discovery parameters would need to be used to grant an access token may be configured in the first SCP node 10. Access token request parameters are discussed in more detail in 3GPP TS 33.501 (as cited above), particularly in section 13.4.1.1. Discovery parameters are discussed in greater detail in 3GPP TS 29.510 V 16.4.0, available at https://portal.3gpp.org/desktopmodules/Specifications/Specification Details.aspx?specificationld=3345 as of 27 July 2020, particularly in section 6.2.3.2.3.1 Tokens may need to be granted with different granularity, for example, they may be required at service level plus network slice level (using Single - Network Slice Selection Assistance Information, S-NSSAI, which may therefore be required to grant an access token in this example). Then, at arrow 614, the NRF grants an access token for the indicated granularity. The access token is then cached by the first SCP node 10 (see block 616 and 506) in conjunction with the criteria of the access token (scope and granularity). The access token may be valid for a predetermined period of time, the duration of which may be indicated by the NRF 60, for example, when the NRF 60 provides the access token response including the access token. After the predetermined period of time, the access token may expire.

As illustrated by block 618, the first SCP node 10 then selects a NF node of the service producer from among the NF profile(s) obtained using the discovery request (at arrows 606 and 608), in this example the second NF node 30. The selected NF node of the service producer is a NF node which corresponds to the granted access token received by the first SCP node at arrow 614. The determination of which of the obtained NF node profile(s) to select (assuming more than one NF node profile has been received) depends on the specific configuration of the SCP node 10.

Once a NF node (in this example, the second NF node 30) has been selected, the first SCP node 10 modifies the address in the request (received from the first NF node 20) from the address of the first SCP node 10 to the address of the host of the second NF node 30, as shown at block 620. The first SCP node 10 may optionally perform further tasks such as NF producer node monitoring (see block 622). The first SCP node 10 then initiates transmission of the service request towards the selected second NF node 30 at arrow 624; the access token obtained by the first SCP node 10 has been added to the service request. As illustrated by arrow 626 of Figure 2A-C, the first SCP node 10 receives a response comprising the result from the second NF node 30. If the selected NF producer node supports binding functionality, the result may comprise a client binding header with binding information, that is intended to be used by the NFc in subsequent requests. The response also includes the NF instance ID, and set ID. As illustrated by arrow 628 of Figure 2A-C, the first SCP node 10 initiates transmission of the response comprising the result towards the first NF node 20. As illustrated by blocks 508 and 630 of Figure 2A-C, the first NF node 20 can then store the result.

In Figure 2A-C, steps 632-640 relate a subsequent service request for an existing UE/session context. At block 632, the first NF node 20 identifies that the subsequent result corresponds to the same UE/session context. At block 634 the first NF node 20 copies the client binding information received in the result from the second NF node 30 to the routing binding, as the communication between the first NF node 10 and second NF node 30 is indirect (via the first SCP node 10) in this example; this step is not necessary where binding is not used. The first NF node 20 then sends a service request (at arrow 636) including the routing binding (in this example; as mentioned above binding is not necessarily used) and also including the client credentials assertion. The client credentials assertion may be required if the previously obtained token has expired.

At block 638, the first SCP node 10 attempts to locate a valid access token from stored results (see blocks 616 and 506 for access token storage). However, the information included in the subsequent request at arrow 636 does not provide the means to identify a valid token. Although a client credentials assertion is included in the subsequent request, other information which may have been provided in a discovery request in the first request (see arrow 604) is not included in the subsequent request at arrow 636. The first SCP node 10 is therefore unable to locate a valid stored access token, and is also unable to request an applicable token as the information required for a token request is not provided. In this example, the S-NSSAI is not provided. Accordingly, it is not possible for the first SCP node 10 to obtain a valid token and the subsequent request procedure fails.

Further background art is: "3rd Generation Partnership Project; Technical Specification Group Services and System Aspects; Security Aspects; Study on security aspects of the 5G Service Based Architecture (SBA) (Release 16)", 3GPP STANDARD; TECHNICAL REPORT; 3GPP TR 33.855, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX ; FRANCE, no. V16.0.0 8 July 2020 (2020-07-08), pages 1-104, XP051924305,Retrieved from the Internet:URL:ftp://ftp.3gpp.org/Specs/ archive/33_series/33.855/33855-g00.zip 33855-g00.doc

Thus in systems using indirect communication, a subsequent request for a service, after a first request that provided discovery parameters to a SCP node to allow selection, is not able to be proceeded by the SCP node. The SCP node cannot find a valid stored access token and does not have enough information to be able to request a new access token.

### Summary

It is an object of the disclosure to obviate or eliminate at least some of the above-described disadvantages associated with existing techniques.

Therefore, according to an aspect of the disclosure, there is provided a method for handling a service request in a network, wherein the method is performed by a first network function, NF, node of a service consumer for connecting to a further NF node of a service producer via a first Service Communication Proxy, SCP, node. The method comprises initiating transmission to the first SCP node of a first request for provision of a first service by the further NF node. The first request comprises discovery parameters and access token request parameters. The access token request parameters facilitate obtaining and storing of an access token by the first SCP node and the discovery parameters facilitate the selection, by the first SCP node, of a second NF node of a service producer as the further NF node to provide the first service and forwarding the request to the second NF node by the first SCP node. The method further comprises receiving a response from the second NF node forwarded by the first SCP node. The method also comprises initiating transmission of a second request to the first SCP node where the second request is a subsequent request for the second NF node to provide the first service. The second request comprises the access token request parameters, and the first SCP node forwards the second request to the second NF node with the stored access token or a newly obtained access token included in the second request.

In some embodiments, the first request may comprise an encrypted token to enable the first SCP node to obtain an access token on behalf of the first NF node, where the encrypted token may be stored with the access token request parameters. The second request may also comprise the encrypted token. The encrypted token may be a NF Service consumer client credentials assertion.

In some embodiments, the second request may be for the second NF node to provide the first service in the same execution context as the first request.

In some embodiments, the access token request parameters may be stored in a User Equipment, UE, data record.

In some embodiments, the access token request parameters may comprise Single - Network Slice Selection Assistance Information, S-NSSAI.

In some embodiments the method may further comprise receiving, by the first SCP node, the first request for provision of a first service by the further NF node. The method may further comprise acquiring service producer NF node profiles, acquiring access tokens, and selecting the second NF node using the acquired service producer NF node profiles. The method may also comprise initiating transmission to the second NF node of a third request for the second NF node to provide a service, the third request including an acquired access token, receiving a response from the second NF node and initiating transmission of the response to the first NF node.

In some embodiments, the step of acquiring service producer NF node profiles may comprise initiating transmission to a Network Repository Function, NRF, node of a fourth request using the discovery parameters from the first request for service producer NF node profiles, and receiving a first response from the NRF node, or retrieving stored service producer NF node profiles. Also, the step of acquiring access tokens may comprise initiating transmission to the NRF node of a fifth request for access tokens using the access token request parameters from the first request, and receiving a second response from the NRF node, or retrieving stored access tokens. Further, the service producer NF node profiles and/or access tokens may be stored.

In some embodiments, the method may further comprise the first SCP node receiving the second request that is a subsequent request for the second NF node to provide the first service. The method may further comprise obtaining a valid access token using the access token request parameters from the second message. The method may also comprise initiating transmission to the second NF node of a sixth request for service provision, the sixth request including a valid access token, receiving a response from the second NF node, and initiating transmission to the first NF node.

According to another aspect of the disclosure, there is provided a first NF node comprising processing circuitry configured to operate in accordance with the method described earlier in respect of the first NF node. In some embodiments, the first NF node may comprise at least one memory for storing instructions which, when executed by the processing circuitry, cause the first NF node to operate in accordance with the method described earlier in respect of the first NF node.

According to another aspect of the disclosure, there is provided a method performed by a system. The method may comprise the method described earlier in respect of the first SCP node and/or the method as described earlier in respect of the first NF node.

According to another aspect of the disclosure, there is provided a system. The system may comprise at least one first SCP node as described earlier and/or at least one first NF node as described earlier.

According to another aspect of the disclosure, there is provided a computer program comprising instructions which, when executed by processing circuitry, cause the processing circuitry to perform the method as described earlier in respect of the first SCP node and/or first NF node.

According to another aspect of the disclosure, there is provided a computer program product, embodied on a non-transitory machine-readable medium, comprising instructions which are executable by processing circuitry to cause the processing circuitry to perform the method as described earlier in respect of the first SCP node and/or first NF node.

Thus, an improved technique for handling service requests in a network is provided.

### Brief description of the drawings

For a better understanding of the technique, and to show how it may be put into effect, reference will now be made, by way of example, to the accompanying drawings, in which:
Figure 1A-D is a block diagram illustrating different existing systems;
Figure 2A-C is a signalling diagram illustrating an exchange of signals in an existing system;
Figure 3 is a block diagram illustrating a first service communication proxy (SCP) node according to an embodiment;
Figure 4 is a flowchart illustrating a method performed by a first SCP node according to an embodiment;
Figure 5 is a block diagram illustrating a first network function (NF) node according to an embodiment;
Figure 6 is a flowchart illustrating a method performed by a first NF node according to an embodiment;
Figure 7A-C is a signalling diagram illustrating an exchange of signals in a system according to an embodiment;
Figure 8 is a block diagram illustrating a first SCP node according to an embodiment; and
Figure 9 is a block diagram illustrating a first NF node according to an embodiment.

### Detailed Description

Herein, techniques for handling a service request in a network are described. A service request can also be referred to as a request for a service. Generally, a service is software intended to be managed for users. Herein, a service can be any type of service, such as a communication service (e.g. a notification service or a callback service), a context management (e.g. user equipment context management (UECM)) service, a data management (DM) service, or any other type of service. The techniques described herein can be used in respect of any network, such as any communications or telecommunications network, e.g. cellular network. The network may be a fifth generation (5G) network or any other generation network. In some embodiments, the network may be a core network or a radio access network (RAN). The techniques described herein are implemented by a first service communication proxy (SCP) node and a first network function (NF) node of a service consumer (NFc node). The SCP node can be configured to operate as an SCP between the NFc node and at least one NF node of a service producer (NFp node) in the network.

An NF is a third generation partnership project (3GPP) adopted or 3GPP defined processing function in a network, which has defined functional behaviour and 3GPP defined interfaces. An NF can be implemented either as a network element on a dedicated hardware, as a software instance running on a dedicated hardware, or as a virtualised function instantiated on an appropriate platform, e.g. on a cloud infrastructure. Herein, the term "node" in relation to an "NF node" will be understood to cover each of these scenarios.

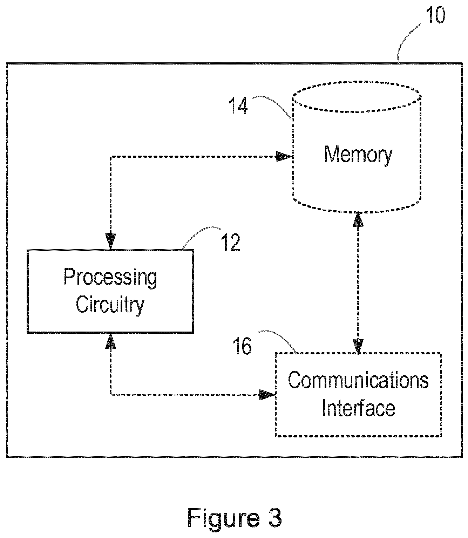

Figure 3 illustrates a first SCP node 10 in accordance with an embodiment. The first SCP node 10 is for handling a service request in a network. The first SCP node 10 is configured to operate as an SCP between a first network function, NF, node (20) of a service consumer and a second NF node (30) of a service producer in the network. In some embodiments, the first SCP node 10 can be, for example, be a physical machine (e.g. a server) or a virtual machine (VM).

As illustrated in Figure 3, the first SCP node 10 comprises processing circuitry (or logic) 12. The processing circuitry 12 controls the operation of the first SCP node 10 and can implement the method described herein in respect of the first SCP node 10. The processing circuitry 12 can be configured or programmed to control the first SCP node 10 in the manner described herein. The processing circuitry 12 can comprise one or more hardware components, such as one or more processors, one or more processing units, one or more multi-core processors and/or one or more modules. In particular implementations, each of the one or more hardware components can be configured to perform, or is for performing, individual or multiple steps of the method described herein in respect of the first SCP node 10. In some embodiments, the processing circuitry 12 can be configured to run software to perform the method described herein in respect of the first SCP node 10. The software may be containerised according to some embodiments. Thus, in some embodiments, the processing circuitry 12 may be configured to run a container to perform the method described herein in respect of the first SCP node 10.

Briefly, the processing circuitry 12 of the first SCP node 10 is configured to receive a first request (from a first NF node 20, a consumer NF node) for provision of a first service by a further NF node (that is a provider NF node). The processing circuitry 12 of the first SCP node 10 is further configured to acquire service producer NF node profiles and access tokens, and select the second NF node 30 using the acquired service producer NF node profiles. The processing circuitry 12 of the first SCP node 10 is also configured to initiate transmission to the second NF node 30 of a third request for the second NF node 30 to provide a service, the third request including an acquired access token; receive a response from the second NF node 30, and initiate transmission of the response to the first NF node 20.

As illustrated in Figure 3, in some embodiments, the first SCP node 10 may optionally comprise a memory 14. The memory 14 of the first SCP node 10 can comprise a volatile memory or a non-volatile memory. In some embodiments, the memory 14 of the first SCP node 10 may comprise a non-transitory media. Examples of the memory 14 of the first SCP node 10 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 12 of the first SCP node 10 can be connected to the memory 14 of the first SCP node 10. In some embodiments, the memory 14 of the first SCP node 10 may be for storing program code or instructions which, when executed by the processing circuitry 12 of the first SCP node 10, cause the first SCP node 10 to operate in the manner described herein in respect of the first SCP node 10. For example, in some embodiments, the memory 14 of the first SCP node 10 may be configured to store program code or instructions that can be executed by the processing circuitry 12 of the first SCP node 10 to cause the first SCP node 10 to operate in accordance with the method described herein in respect of the first SCP node 10. Alternatively or in addition, the memory 14 of the first SCP node 10 can be configured to store any information, data, messages, requests, responses, indications, notifications, signals, or similar, that are described herein. The processing circuitry 12 of the first SCP node 10 may be configured to control the memory 14 of the first SCP node 10 to store information, data, messages, requests, responses, indications, notifications, signals, or similar, that are described herein.

In some embodiments, as illustrated in Figure 3, the first SCP node 10 may optionally comprise a communications interface 16. The communications interface 16 of the first SCP node 10 can be connected to the processing circuitry 12 of the first SCP node 10 and/or the memory 14 of first SCP node 10. The communications interface 16 of the first SCP node 10 may be operable to allow the processing circuitry 12 of the first SCP node 10 to communicate with the memory 14 of the first SCP node 10 and/or vice versa. Similarly, the communications interface 16 of the first SCP node 10 may be operable to allow the processing circuitry 12 of the first SCP node 10 to communicate with the first NF node and/or any other node. The communications interface 16 of the first SCP node 10 can be configured to transmit and/or receive information, data, messages, requests, responses, indications, notifications, signals, or similar, that are described herein. In some embodiments, the processing circuitry 12 of the first SCP node 10 may be configured to control the communications interface 16 of the first SCP node 10 to transmit and/or receive information, data, messages, requests, responses, indications, notifications, signals, or similar, that are described herein.

Although the first SCP node 10 is illustrated in Figure 3 as comprising a single memory 14, it will be appreciated that the first SCP node 10 may comprise at least one memory (i.e. a single memory or a plurality of memories) 14 that operate in the manner described herein. Similarly, although the first SCP node 10 is illustrated in Figure 3 as comprising a single communications interface 16, it will be appreciated that the first SCP node 10 may comprise at least one communications interface (i.e. a single communications interface or a plurality of communications interfaces) 16 that operate in the manner described herein. It will also be appreciated that Figure 3 only shows the components required to illustrate an embodiment of the first SCP node 10 and, in practical implementations, the first SCP node 10 may comprise additional or alternative components to those shown.

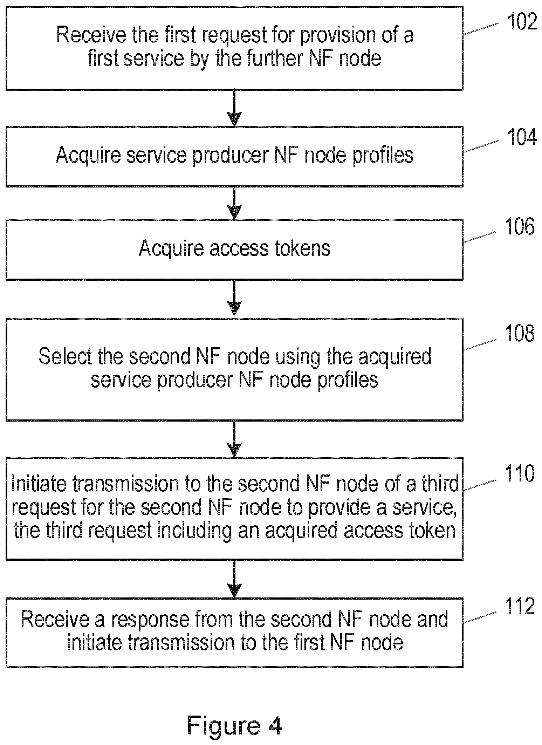

**Figure 4** is a flowchart illustrating a method performed by a first SCP node 10 in accordance with an embodiment. The first SCP node 10 is configured to operate as an SCP between a first NF node of a service consumer and a second NF node of a service producer in the network. The method is for handling a service request in the network. The first SCP node 10 described earlier with referenced to Figure 3 may be configured to operate in accordance with the method of Figure 4. The method can be performed by or under the control of the processing circuitry 12 of the first SCP node 10.

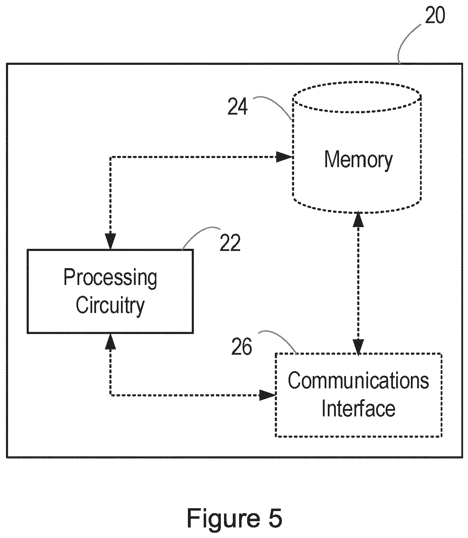

The method of Figure 4 is performed when a first request, for a first service to be provided, is received from the first NF node 20 (see block 102 of Figure 4). The initiation of transmission of the first request by the first NF node 20 is discussed below with reference to Figure 5. After receiving the first request, the first SCP node 10 acquires service producer NF node (NFp) profiles (see block 104). The NFp profiles may be acquired from a NRF 60; the first SCP node 10 may submit a discovery request to the NRF 60 and may then receive a response from the NRF 60 including the NFp profiles. Where a discovery request to the NRF 60 is used, this discovery request may use discovery parameters included in the first request from the first NF node 20, and may also include parameters from the first SCP node 10 based on the local configuration of the first SCP node 10. The acquired NFp profiles may then be stored by the first SCP node 10. Alternatively, the first SCP node 10 may retrieve stored NFp profiles from storage that is part of or connected to the first SCP node 10 if stored NFp profiles are available.

The first SCP node 10 also acquires one or more access tokens, as illustrated by block 106. The access tokens may be acquired from a NRF 60, by submitting an access token request and receiving an access token response including the access token(s). The access token request may include access token request parameters, which may form part of the discovery parameters sent in the first request by the first NF node 20. The access token request parameters may include an encryption token such as a client credentials assertion from the first NF node 20. Using such an encrypted token, the first SCP node 10 may be able to obtain an access token on behalf of the first NF node 20. The acquired access token(s) may then be stored by the first SCP node 10. The first SCP node 10 may also include information in the access token request not taken from the discovery parameters, for example, the scope of the requested token(s), the granularity of the requested token(s), and so on. Alternatively, the first SCP node 10 may retrieve stored access tokens from storage that is part of or connected to the first SCP node 10 if stored access tokens are available.

The first SCP node 10 then selects one of the NFp nodes for which a profile has been obtained, using the acquired NFp profiles and with reference to the acquired access tokens (see block 108). That is, the first SCP node 10 may prioritise selection of a NFp node for which an access token has been obtained, or may only select a NFp node for which an access token has been obtained. In the following text, the selected NFp node may be referred to as the second NF node 30, for ease of understanding.

Having selected a NFp node (the second NF node 30), the first SCP node 10 then initiates transmission, to the second NF node 30, of a request for the second NF node 30 to provide the first service 40 to the first NF node 20, as illustrated by block 110 of Figure 4. The request sent to the second NF node 30 is essentially the same as the first request received by the first SCP node 10 from the first NF node 20, but with the SCP address replaced with the address of the second NF node and with the access token acquired by the first SCP node 10 included in the request.

Herein, the term "initiate" can mean, for example, cause or establish. Thus, the processing circuitry 12 of the first SCP node 10 can be configured to itself transmit the information (e.g. via a communications interface 16 of the first SCP node 10) or can be configured to cause another node to transmit the information. Similarly, where the first NF node 20 initiates transmission, the first NF node 20 may be configured to itself transmit the information (e.g. via a communications interface 26 of the first NF node 020) or can be configured to cause another node to transmit the information.

The first SCP node 10 then receives a response to the request from the second NF node 30 (including the NF instance ID and potentially also including binding information if binding is used), and initiates transmission of this response to the first NF node 20 (see block 112). Upon receiving this response, the first NF node 20 may store the information in the execution context, for example, UE/session context, as discussed in detail below.

The first SCP node 10 may be further configured to receive a subsequent request from the first NF node 20, the subsequent request being for the second NF node 30 to provide the first service. As discussed in greater detail below, the subsequent request may include access token request parameters, which may be used by the first SCP node 10 to obtain a valid access token. Where the first SCP node has stored a valid access token, this access token may be retrieved using the access token request parameters from the subsequent request. Alternatively, where the first SCP node does not have a valid access token stored (either because no valid token was stored or because a previously valid stored token has expired), the access token request parameters may be used to request a new access token, for example, from a NRF 60. When a valid access token has been obtained using the access token request parameters from the subsequent request, the first SCP node 10 may then initiate transmission of a request to the second NF node 30 for service provision; the request may be essentially the same as the subsequent request received by the first SCP node 10 from the first NF node 20, but with the SCP address replaced with the address of the second NF node 30 and with the access token acquired by the first SCP node 10 included in the request. Upon receiving a response from the second NF node 30, the first SCP node 10 may then initiate transmission of this response to the first NF node 20.

Figure 5 illustrates a first NF node 20 in accordance with an embodiment. The first NF node 20 is for handling a service request in a network. The first NF node 20 is configured to operate as a first NF node of a service consumer. In some embodiments, the first NF node 20 can be, for example, be a physical machine (e.g. a server) or a virtual machine (VM). The first NF node 20 can be, for example, a user equipment (UE).

As illustrated in Figure 5, the first NF node 20 comprises processing circuitry (or logic) 22. The processing circuitry 22 controls the operation of the first NF node 20 and can implement the method described herein in respect of the first NF node 20. The processing circuitry 22 can be configured or programmed to control the first NF node 20 in the manner described herein. The processing circuitry 22 can comprise one or more hardware components, such as one or more processors, one or more processing units, one or more multi-core processors and/or one or more modules. In particular implementations, each of the one or more hardware components can be configured to perform, or is for performing, individual or multiple steps of the method described herein in respect of the first NF node 20. In some embodiments, the processing circuitry 22 can be configured to run software to perform the method described herein in respect of the first NF node 20. The software may be containerised according to some embodiments. Thus, in some embodiments, the processing circuitry 22 may be configured to run a container to perform the method described herein in respect of the first NF node 20.

Briefly, the processing circuitry 22 of the first NF node 20 is configured to initiate transmission to a first SCP node 10 of a first request for provision of a first service 40 by a further NF node (the further NF node being a service provider NF node). The first request comprises discovery parameters including access token request parameters, wherein the discovery parameters facilitate the selection, by the first SCP node 10, of a second NF node 30 of a service producer as the further NF node to provide the first service 40. In addition to including the access token request parameters in the discovery parameters, the access token request parameters may also be sent in a separate header to the discovery parameters, for example, an access token parameter header. In addition to initiating transmission of the first request, the processing circuitry 22 of the first NF node 20 is configured to store the access token request parameters, and receive a response from the second NF node 30 (via the first SCP node 10). The processing circuitry 22 of the first NF node 20 is also configured to initiate transmission of a second request to the first SCP node 10, where the second request is a subsequent request for the second NF node 30 to provide the first service 40. The second request comprises stored access token request parameters useable (for example, by the first SCP node 10) to identify a stored access token or request an access token.

As illustrated in Figure 5, in some embodiments, the first NF node 20 may optionally comprise a memory 24. The memory 24 of the first NF node 20 can comprise a volatile memory or a non-volatile memory. In some embodiments, the memory 24 of the first NF node 20 may comprise a non-transitory media. Examples of the memory 24 of the first NF node 20 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 22 of the first NF node 20 can be connected to the memory 24 of the first NF node 20. In some embodiments, the memory 24 of the first NF node 20 may be for storing program code or instructions which, when executed by the processing circuitry 22 of the first NF node 20, cause the first NF node 20 to operate in the manner described herein in respect of the first NF node 20. For example, in some embodiments, the memory 24 of the first NF node 20 may be configured to store program code or instructions that can be executed by the processing circuitry 22 of the first NF node 20 to cause the first NF node 20 to operate in accordance with the method described herein in respect of the first NF node 20. Alternatively or in addition, the memory 24 of the first NF node 20 can be configured to store any information, data, messages, requests, responses, indications, notifications, signals, or similar, that are described herein. The processing circuitry 22 of the first NF node 20 may be configured to control the memory 24 of the first NF node 20 to store information, data, messages, requests, responses, indications, notifications, signals, or similar, that are described herein.

In some embodiments, as illustrated in Figure 5, the first NF node 20 may optionally comprise a communications interface 26. The communications interface 26 of the first NF node 20 can be connected to the processing circuitry 22 of the first NF node 20 and/or the memory 24 of first NF node 20. The communications interface 26 of the first NF node 20 may be operable to allow the processing circuitry 22 of the first NF node 20 to communicate with the memory 24 of the first NF node 20 and/or vice versa. Similarly, the communications interface 26 of the first NF node 20 may be operable to allow the processing circuitry 22 of the first NF node 20 to communicate with the first SCP node 10 and/or any other node. The communications interface 26 of the first NF node 20 can be configured to transmit and/or receive information, data, messages, requests, responses, indications, notifications, signals, or similar, that are described herein. In some embodiments, the processing circuitry 22 of the first NF node 20 may be configured to control the communications interface 26 of the first NF node 20 to transmit and/or receive information, data, messages, requests, responses, indications, notifications, signals, or similar, that are described herein.

Although the first NF node 20 is illustrated in Figure 5 as comprising a single memory 24, it will be appreciated that the first NF node 20 may comprise at least one memory (i.e. a single memory or a plurality of memories) 24 that operate in the manner described herein. Similarly, although the first NF node 20 is illustrated in Figure 5 as comprising a single communications interface 26, it will be appreciated that the first NF node 20 may comprise at least one communications interface (i.e. a single communications interface or a plurality of communications interface) 26 that operate in the manner described herein. It will also be appreciated that Figure 5 only shows the components required to illustrate an embodiment of the first NF node 20 and, in practical implementations, the first NF node 20 may comprise additional or alternative components to those shown.

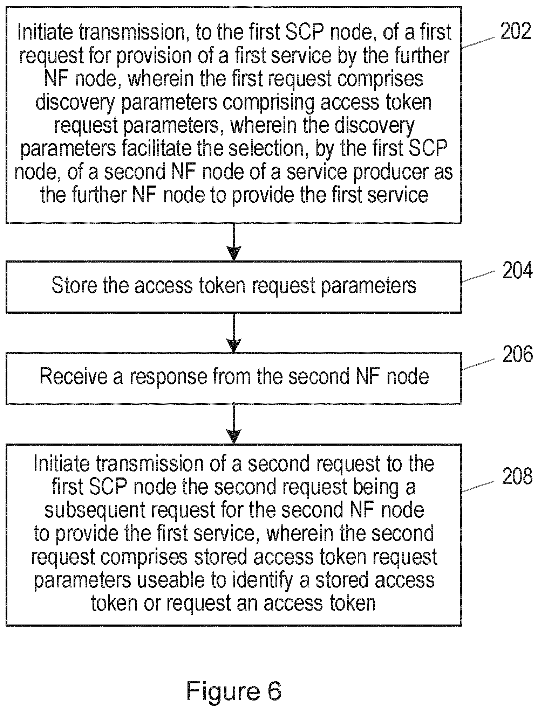

Figure 6 is a flowchart illustrating a method performed by a first NF node 20 in accordance with an embodiment. The method of Figure 6 is for handling a service request in the network. The first NF node 20 described earlier with referenced to Figure 5 is configured to operate in accordance with the method of Figure 6. The method can be performed by or under the control of the processing circuitry 22 of the first NF node 20. A first SCP node 10 is configured to operate as an SCP between the first NF node 20 and a second NF node of a service producer in the network,

The method of Figure 6 is performed for connecting to a further NF node of a service producer (such as the second NF node 40) via the first SCP node 10. The first request is for provision of a first service (40) by the further NF node, and transmission of this first request is initiated to the first SCP node 10 (see block 202). The first request comprises discovery parameters, comprising access token request parameters, wherein the discovery parameters facilitate the selection, by the first SCP node 10, of a second NF node 30 of a service producer as the further NF node to provide the first service 40. The access token request parameters are stored by the first NF node 10 (see block 204). The access token request parameters may comprise, for example, an encrypted token such as a client credentials assertion for the first NF node 20 (a NF Service consumer client credentials assertion) or another type of encrypted token. Using such an encrypted token, the first SCP node 10 may be able to obtain an access token on behalf of the first NF node 20. Where the first request includes an encrypted token, this may be stored as part of the access token request parameters.

The access token request parameters may be stored in the execution context of the first request, which may be a UE/session context, a Protocol Data Unit (PDU)/session context, or another context. In particular, the access token request parameters may be stored in a UE data record. The access token request parameters may further comprise various other information, such as Single - Network Slice Selection Assistance Information (S-NSSAI), Fully Qualified Domain Names (FQDN), and so on. A discussion of various parameters which may be included in access token requests can be found in 3GPP TS 29.510 V 16.4.0, as cited above. In particular, section 6.3.5.2.2 of the cited document provides an overview of relevant data types. A corresponding overview of discovery data types can be found in section 6.2.3.2.3.1 of the same cited document. Once received by the first SCP node 10, the access token request parameters may be used to obtain an access token, potentially in conjunction with further parameters such as scope information that are not derived from the access token request parameters in the first request. The method further comprises receiving a response from the second NF node 30 (see block 206), via the first SCP node 10.

The method additionally comprises initiating transmission (see block 208) of a second request to the first SCP node 10. The second request is a subsequent request for the provision of the first service; the subsequent request is for the first service to be provided by the second NF node 30. The second request includes at least a portion of the stored access token request parameters that were included in the discovery parameters sent in the first request. The access token request parameters may be sent in a specific access token parameter header in the subsequent request. Where the stored access token request parameters comprise an encrypted token (as discussed above), this encrypted token may be included in the second request. The access token request parameters in the second request may allow the first SCP node 10 to obtain a valid access token; the valid access token may be obtained by retrieving a stored access token, or by requesting an access token (for example, from the NRF 60). Where a stored access token is retrieved, the access token parameters are used to locate by the first SCP node 10 the said stored access token. Where no valid stored access token is available, either because no stored access tokens are available or because the stored access tokens have expired (timed out), the access token parameters may be used to request a new access token from the NRF 60, using a similar process to that which may be used to obtain an access token in respect of the first request. Using the obtained access token, the first SCP node 10 may then send a request to the second NF node 30, receive a response which is passed to the first NF node 20, and so on.

There is also provided a system. The system can comprise at least one first SCP node 10 as described herein and/or at least one first NF node 20 as described herein. The system may also comprise any one or more of the other nodes mentioned herein.

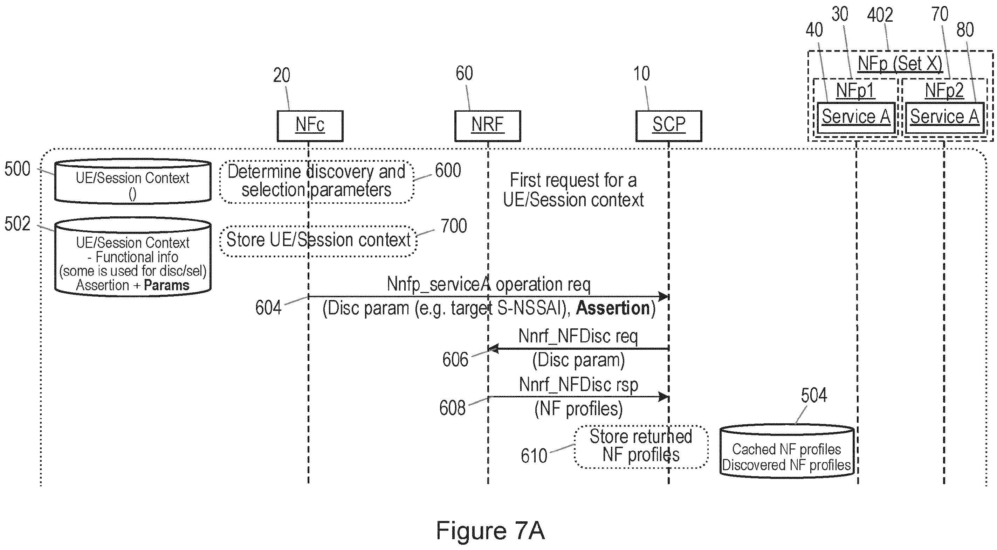

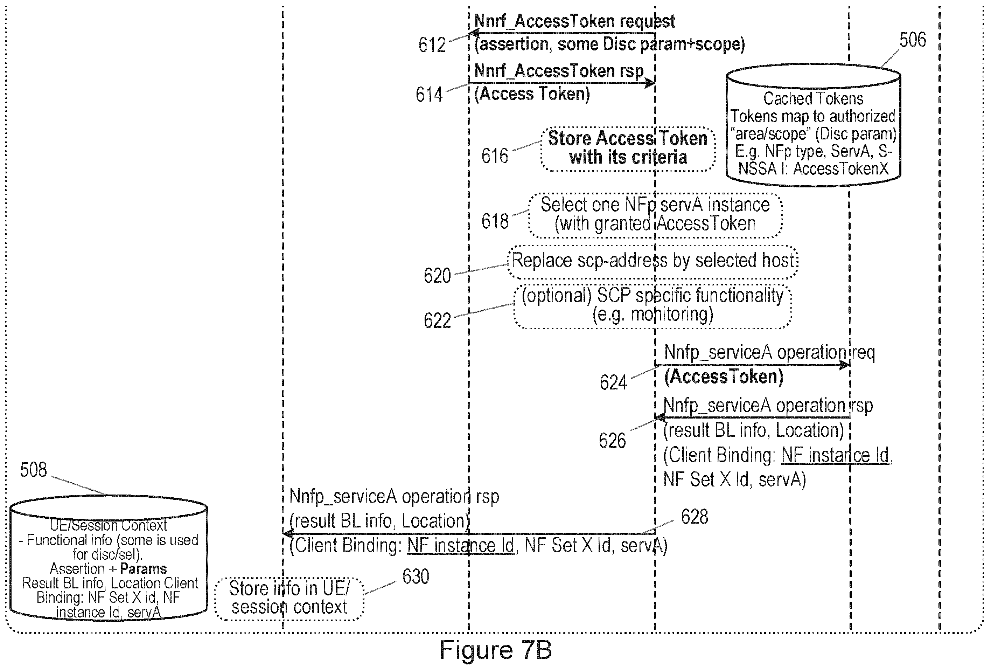

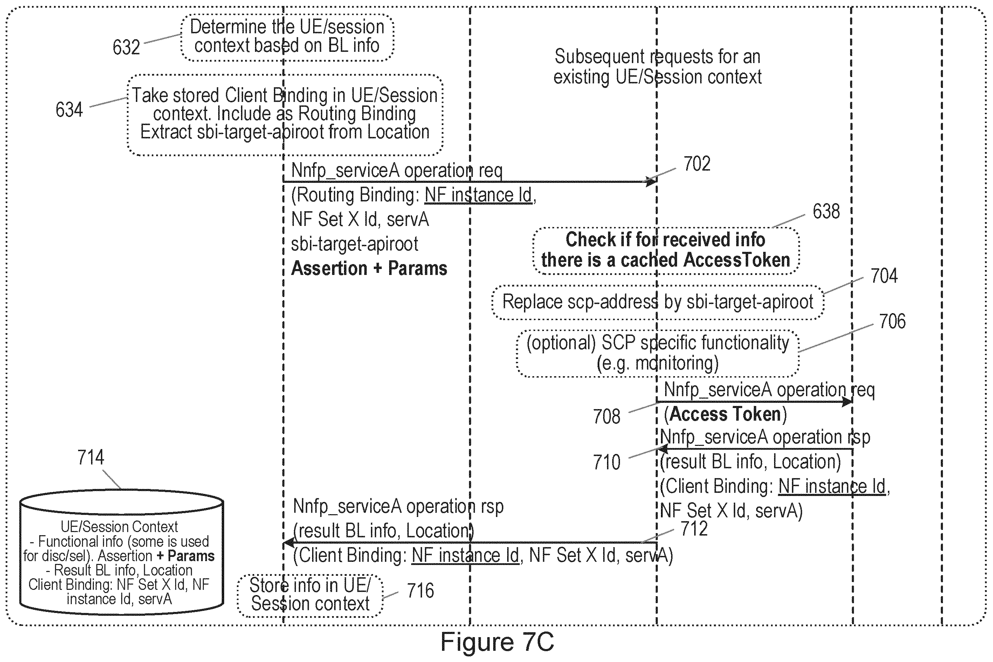

Figure 7A-C is a signalling diagram illustrating is a signalling diagram illustrating an exchange of signals. The system illustrated in Figure 7A-C comprises a first SCP node 10, a first NF node 20 of a service consumer ("NFc"), a second NF node 30 of a service producer ("NFp1"), and a third NF node 70 of a service producer ("NFp2"). The first SCP node 10 is configured to operate as an SCP between the first NF node 20 and the second NF node 30. The second NF node 30 can be configured to provide (e.g. execute or run) a service 40 and the third NF node 70 can be configured to provide (e.g. execute or run) a service 80. The second NF node 30 and the third NF node 70 can be configured to provide (e.g. execute or run) the same service or a different service. The second NF node 30 and the third NF node 70 can be part of a set 402 of NF nodes of a service producer. The system illustrated in Figure 2A-C also comprises a NRF 60. In some embodiments, an entity may comprise the first SCP node 10 and the NRF 60. That is, in some embodiments, the first SCP node 10 can be merged with the NRF 60 in a combined entity.

In some embodiments, the first SCP node 10 and the first NF node 20 may be deployed in independent deployment units and/or the first SCP node 10 and the second NF node 30 may be deployed in independent deployment units. Thus, an SCP node based on independent deployment units is possible, as described in 3GPP TS 23.501 v16.5.0 (as cited above). In other embodiments, the first SCP node 10 may be deployed as a distributed network element. For example, in some embodiments, part (e.g. a service agent) of the first SCP node 10 may be deployed in the same deployment unit as the first NF node 20 and/or part (e.g. a service agent) of the first SCP node 10 may be deployed in the same deployment unit as the second NF node 30. Thus, an SCP node based on service mesh is possible, as described in 3GPP TS 23.501 V16.5.0.

In some embodiments, at least one second SCP node may be configured to operate as an SCP between the first NF node 20 and the first SCP node 10 and/or at least one third SCP node may be configured to operate as an SCP between the first SCP node 10 and the second NF node 30. Thus, a multipath of SCP nodes is possible. In some of these embodiments, the first SCP node 10 and one or both of the at least one second SCP node and the at least one third SCP node may be deployed in independent deployment units. In some embodiments, the at least one second SCP node and/or the at least one third SCP node may be deployed as distributed network elements.

Steps 500, 504, 506 and 508 and 600-638 of Figure 7A-C are as described earlier with reference to Figure 2A-C. Some key differences between the example illustrated in Figure 2A-C and the embodiment of Figure 7A-C are as follows. In step 700, similarly to step 602 the first NF node 20 stores the context (UE/session context, PDU/session context, and so on). Step 700 comprises additionally storing the access token request parameters as may be used by the first SCP node 10 to obtain an access token. As discussed above in the context of Figure 4 and Figure 6, the access token request parameters may include an encryption token which, if present, may also be stored in step 700. The access token request parameters may then be sent (as part of the discovery parameters) to the first SCP node 10 in step 604, and the process of the first request proceeds as shown in Figure 2A-C. At step 632, the process related to a subsequent request for the same service begins. The subsequent request may be a second request, third request, fourth request, and so on. In the embodiment illustrated in Figure 7A-C, binding has been used, and therefore the client binding information provided to the first NF node 20 is included as routing binding information in step 634; as mentioned previously the use of binding is optional and binding is not necessarily used. In step 702, the subsequent service request is sent to the first SCP node 10. However, as the access token request parameters were stored by the first NF node 20 in step 700, these parameters may also be included in the subsequent request of step 702. In the embodiment illustrated in Figure 7A-C, the encryption token (client credential assertion in this example) is included as part of the access token request parameters.

The first SCP node 10 receives the subsequent request and, at step 638, attempts to locate a valid access token. In the example illustrated in Figure 2A-C, this attempt fails as the information included in the subsequent request at arrow 636 does not provide the means to identify a valid token. The first SCP node in Figure 2A-C is also unable to request an applicable token as the information required for a token request is not provided in the subsequent request of that example. By contrast, the access token request parameters included in the subsequent request of the embodiment illustrated in Figure 7A-C allows the stored access token to be retrieved (for example, from a memory of the first SCP node 10). In this embodiment, the S-NSSAI is required and is included in the access token request parameters. The stored access token is valid in this embodiment, however even if the stored access token were to not be valid (that is, not present or expired, or a token of a different scope is required), then the access token request parameters included in the subsequent request could be used by the first SCP node 10 to obtain a new access token from the NRF 60. In some embodiments the first SCP node 10 may be combined with the NRF 60, and the access token request parameters may therefore be used to retrieve an access token from the NRF that is combined with the first SCP node 10.

As a valid access token can be obtained in by the first SCP node 10, unlike the process illustrated in Figure 2A-C, the subsequent request process of the embodiment illustrated by Figure 7A-C does not fail. Instead, similar steps to those that occur in the first request are performed. The SCP node 10 modifies the address in the request (received from the first NF node 20) from the address of the first SCP node 10 to the address of the host of the second NF node 30, as shown at block 704. Optional further tasks may then be performed by the first SCP node 10 (such as monitoring), as shown in step 706. The first SCP node 10 then initiates transmission of the subsequent service request towards the selected second NF node 30 at step 708; the valid access token obtained by the first SCP node 10 has been added to the service request. At step 710 the first SCP node 10 receives the response comprising the result from the second NF node 30, then at step 712 this response is sent to the first NF node 20 and stored in the execution context (step 714 and 716, in this embodiment the execution context is the UE/session context). Accordingly, as a result of the inclusion of the access token request parameters in the subsequent service request, a valid access token that is either a stored token or new token may be obtained and the request process may succeed.

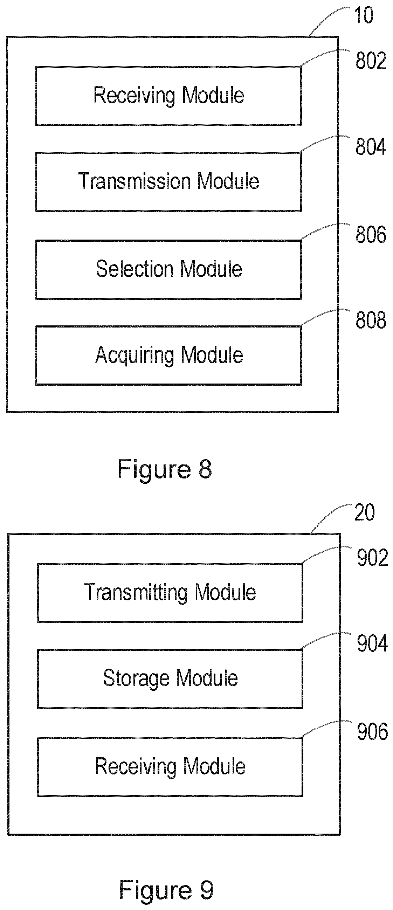

Figure 8 is a block diagram illustrating a first SCP node 10 in accordance with an embodiment. The first SCP node 10 can handle a service request in a network. The first SCP node 800 can operate as an SCP between a first NF node of a service consumer and a second NF node of a service producer in the network. The first SCP node 800 comprises a receiving module 802 configured to receive the first request, from the first NF node 20, requesting provision of the first service. The first SCP node 800 comprises an acquiring module 808 configured to acquire service producer NF node profiles and access tokens. The first SCP node 800 also comprises a selecting module 806 configured to select a producer NF node (such as the second NF node 30) using the acquired service producer NF node profiles. The first SCP node 800 additionally comprises a transmission module 804 configured to initiate transmission to the selected producer NF node a request to provide a service, the request including the acquired access token. The receiving module is further configured to receive the response from the second NF node 30. The first SCP node 10 may operate in the manner described herein in respect of any process performed by the first SCP node.

**Figure** 9 is a block diagram illustrating a first NF node 20 of a service consumer in accordance with an embodiment. The first NF node 20 can handle a service request in a network, in particular, may operate as a first NF node of a service consumer. The first NF node 20 comprises a transmitting module 902 configured to initiate transmission of a first request for a first service to be provided by a further NF node, the first request being transmitted to a first SCP node 10. The first request comprises discovery parameters comprising access token request parameters, wherein the discovery parameters facilitate the selection, by the first SCP node 10, of a second NF node 30 of a service producer as the further NF node to provide the first service 40. The first NF node 20 also comprises a storage module 904 configured to store the access token request parameters, wherein the access token request parameters may be stored in, for example, an execution context. The first NF node 20 further comprises a receiving module 906 configured to receive a response from the second NF node. The transmission module 902 is further configured to initiate transmission of a second request to the first SCP node 10, the second request being a subsequent request for the second NF node 30 to provide the first service 40, wherein the second request comprises stored access token request parameters useable to identify a stored access token or request an access token. The second request may be for the second NF node 30 to provide the first service 40 in the same execution context (for example, UE/session context or PDU/session context) as the first request. The first NF node 20 may operate in the manner described herein in respect of any process performed by the first NF node.

There is also provided a computer program comprising instructions which, when executed by processing circuitry (such as the processing circuitry 12 of the first SCP node 10 described earlier and/or the processing circuitry 22 of the first NF node 20 described earlier), cause the processing circuitry to perform at least part of the method described herein. There is provided a computer program product, embodied on a non-transitory machine-readable medium, comprising instructions which are executable by processing circuitry (such as the processing circuitry 12 of the first SCP node 10 described earlier and/or the processing circuitry 22 of the first NF node 20 described earlier) to cause the processing circuitry to perform at least part of the method described herein. There is provided a computer program product comprising a carrier containing instructions for causing processing circuitry (such as the processing circuitry 12 of the first SCP node 10 described earlier and/or the processing circuitry 22 of the first NF node 20 described earlier) to perform at least part of the method described herein. In some embodiments, the carrier can be any one of an electronic signal, an optical signal, an electromagnetic signal, an electrical signal, a radio signal, a microwave signal, or a computer-readable storage medium.

Other embodiments include those defined in the following numbered statements:
Statement 1. A method for handling a service request in a network, wherein the method is performed by a first network function, NF, node (20) of a service consumer for connecting to a further NF node of a service producer via a first Service Communication Proxy, SCP, node (10), the method comprising:
   initiating transmission (604), to the first SCP node (10), of a first request for provision of a first service (40) by the further NF node, wherein the first request comprises discovery parameters comprising access token request parameters, wherein the discovery parameters facilitate the selection, by the first SCP node (10), of a second NF node (30) of a service producer as the further NF node to provide the first service (40),
   storing (700) the access token request parameters;
   receiving (628) a response from the second NF node (30); and
   initiating transmission (702) of a second request to the first SCP node (10), the second request being a subsequent request for the second NF node (30) to provide the first service (40), wherein the second request comprises stored access token request parameters useable to identify a stored access token or request an access token.
Statement 2. The method of Statement 1, wherein:
   the first request further comprises an encrypted token to enable the first SCP node (10) to obtain an access token on behalf of the first NF node (20);
   the encrypted token is stored with the access token request parameters; and
   the second request comprises the encrypted token.
Statement 3. The method of Statement 2, wherein the encrypted token is a NF Service consumer client credentials assertion.
Statement 4. The method of any preceding Statement, wherein the second request is for the second NF node (30) to provide the first service (40) in the same execution context as the first request.
Statement 5. The method of any preceding Statement, wherein the storage of the access token request parameters is in a User Equipment, UE, data record.
Statement 6. The method of any preceding Statement, wherein the access token request parameters comprise Single - Network Slice Selection Assistance Information, S-NSSAI.
Statement 7. The method of any preceding Statement further comprising, by the first SCP node (10):
   receiving (604) the first request for provision of a first service (40) by the further NF node;
   acquiring (606, 608) service producer NF node profiles;
   acquiring (612, 614) access tokens using the access token parameters from the first request;
   selecting (618) the second NF node (30) using the acquired service producer NF node profiles;
   initiating transmission (624) to the second NF node (30) of a third request for the second NF node (30) to provide a service, the third request including an acquired access token;
   receiving (626) a response from the second NF node (30) and initiating transmission (628) to the first NF node (20).
Statement 8. The method of Statement 7, wherein the step of acquiring service producer NF node profiles comprises:
   initiating transmission (606), to a Network Repository Function, NRF, node (60), of a fourth request using the discovery parameters from the first request for service producer NF node profiles, and receiving (608) a first response from the NRF node (60); or
   retrieving stored service producer NF node profiles.
Statement 9. The method of any of Statements 7 and 8, wherein the step of acquiring access tokens comprises:
   initiating transmission (612) to the NRF node of a fifth request for access tokens using the access token request parameters from the first request, and receiving (614) a second response from the NRF node; or
   retrieving stored access tokens.
Statement 10. The method of any of Statements 7 to 9 further comprising, by the first SCP node (10):
   storing (610) the service producer NF node profiles; and/or
   storing (616) the access tokens.
Statement 11. The method of any of Statements 7 to 10 further comprising, by the first SCP node (10):
   receiving (702) the second request that is a subsequent request for the second NF node (30) to provide the first service (40);
   obtaining (638) a valid access token using the access token request parameters from the second message;
   initiating transmission (708) to the second NF node (30) of a sixth request for service provision, the sixth request including a valid access token;
   receiving (710) a response from the second NF node (30) and initiating transmission (712) to the first NF node (20).
Statement 12. The method of any preceding Statement, wherein:
   the first SCP node (10) and the first NF node (20) are deployed in independent deployment units; and/or
   the first SCP node (10) and the second NF node (30) are deployed in independent deployment units.
Statement 13. The method of any of Statements 1 to 11, wherein:
   the first SCP node (10) is deployed as a distributed network element.
Statement 14. The method of Statement 13, wherein:
   part of the first SCP node (10) is deployed in the same deployment unit as the first NF node (20); and/or
   part of the first SCP node (10) is deployed in the same deployment unit as the second NF node (30).
Statement 15. The method of any preceding Statement, wherein:
   at least one second SCP node is configured to operate as an SCP between the first NF node (20) and the first SCP node (10); and/or
   at least one third SCP node is configured to operate as an SCP between the first SCP node (10) and the second NF node (30).
Statement 16. The method of Statement 15, wherein:
   the first SCP node (10) and one or both of the at least one second SCP node and the at least one third SCP node are deployed in independent deployment units.
Statement 17. The method of Statement 15, wherein:
   the at least one second SCP node and/or the at least one third SCP node are deployed as distributed network elements.
Statement 18. The method of any preceding Statement, wherein:
   an entity comprises the first SCP node (10) and the NRF node (60).
Statement 19. A first NF node (20) comprising:
   processing circuitry (22) configured to operate in accordance with any of Statements 1 to 6.
Statement 20. The first NF node (20) of Statement 19, wherein:
   the first NF node (20) comprises:
   at least one memory (24) for storing instructions which, when executed by the processing circuitry (22), cause the first NF node (20) to operate in accordance with any of Statements 1 to 6.
Statement 21. A system comprising:
   a first NF node (20) of any of Statements 19 and 20;
   and further comprising a first SCP node (10), the first SCP node (10) comprising processing circuitry (12) configured to operate in accordance with any of Statements 7 to 11.
Statement 22. The system of Statement 21, wherein:
   the first SCP node (10) comprises:
   at least one memory (14) for storing instructions which, when executed by the processing circuitry (12), cause the first SCP node (10) to operate in accordance with any of Statements 7 to 11.
Statement 23. A computer program comprising instructions which, when executed by processing circuitry, cause the processing circuitry to perform the method according to any of Statements 1 to 6 and/or any of Statements 7 to 11.
Statement 24. A computer program product, embodied on a non-transitory machine-readable medium, comprising instructions which are executable by processing circuitry to cause the processing circuitry to perform the method according to any of Statements 1 to 6 and/or any of Statements 7 to 11.

In some embodiments, the first SCP node functionality and/or the first NF node functionality described herein can be performed by hardware. Thus, in some embodiments, any one or more of the first SCP node 10 and the first NF node 20 described herein can be a hardware node. However, it will also be understood that optionally at least part or all of the first SCP node functionality and/or the first NF node functionality described herein can be virtualized. For example, the functions performed by any one or more of the first SCP node 10 and the first NF node 20 described herein can be implemented in software running on generic hardware that is configured to orchestrate the node functionality. Thus, in some embodiments, any one or more of the first SCP node 10 and the first NF node 20 described herein can be a virtual node. In some embodiments, at least part or all of the first SCP node functionality and/or the first NF node functionality described herein may be performed in a network enabled cloud. The first SCP node functionality and/or the first NF node functionality described herein may all be at the same location or at least some of the node functionality may be distributed.

It will be understood that at least some or all of the method steps described herein can be automated in some embodiments. That is, in some embodiments, at least some or all of the method steps described herein can be performed automatically. The method described herein can be a computer-implemented method.

Thus, in the manner described herein, there is advantageously provided an improved technique for handling service requests in a network. The first NF node 20 can store access token request parameters and include the stored parameters in subsequent service requests. Using the provided access token request parameters, the first SCP node 10 can retrieve a valid access token and proceed the subsequent service request. Accordingly system performance is improved.

It should be noted that the above-mentioned embodiments illustrate rather than limit the idea, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope. P

## Claims

1. A method for handling a service request in a network, wherein a first network function, NF, node (20) of a service consumer connects to a second NF node (30) of a service producer via a first Service Communication Proxy, SCP, node (10), the method is performed by the SCP node, the method comprising:
• receiving (702) a second request that is a subsequent request for the second NF node (30) to provide a first service (40), the second request comprising access token request parameters,
• obtaining (638) a valid access token using the access token request parameters from the second message,
• initiating transmission (708) to the second NF node (30) of a sixth request for service provision, the sixth request including the valid access token,
• receiving (710) a response from the second NF node (30), and initiating transmission (712) to the first NF node (20).

2. The method of claim 1 further comprising:
• receiving (604) a first request for provision of a first service (40) by second NF node (30), the first request comprising discovery parameters and access token request parameters,
• acquiring (606, 608) service producer NF node profiles,
• acquiring (612, 614) an access token using the access token parameters from the first request,
• selecting (618) the second NF node (30) using the acquired service producer NF node profiles,
• initiating transmission (624) to the second NF node (30) of a third request for the second NF node (30) to provide a service, the third request including the acquired access token,
• receiving (626) a response from the second NF node (30) and initiating transmission (628) to the first NF node (20),

3. The method of claim 1 or 2 further comprising, by the first SCP node (10):
• storing (610) the service producer NF node profiles; and/or
• storing (616) the access token.

4. The method of claim 1 or 2, wherein the step of acquiring service producer NF node profiles comprises:
• initiating transmission (606), to a Network Repository Function, NRF, node (60), of a fourth request using the discovery parameters from the first request for service producer NF node profiles, and receiving (608) a first response from the NRF node (60), or
• retrieving stored service producer NF node profiles.

5. The method of any of claim 1 or 2, wherein the step of acquiring access tokens comprises:
• initiating transmission (612) to the NRF node of a fifth request for a access token using the access token request parameters from the first request, and receiving (614) a second response from the NRF node comprising an access token, or
• retrieving a stored access token.

6. A first SCP node (10) comprising:
• at least one memory (14) for storing NF profiles, tokens and instructions which, when executed by the processing circuitry (12), cause the first SCP node (10) to operate in accordance with any of claims 1-5

7. A computer program product, embodied on a non-transitory machine-readable medium, comprising instructions which are executable by processing circuitry to cause the processing circuitry to perform the method according to any of claims 1 to 5.

8. A system comprising a first NF node (20) and a first SCP node (10) further comprising processing circuitry configured to operate in accordance with any of claims 1-5.

## Patentansprüche

1. Verfahren zur Handhabung einer Dienstanforderung in einem Netzwerk, wobei ein erster Knoten (20) mit Netzwerkfunktion, NF, eines Dienstverbrauchers über einen ersten Dienstkommunikationsproxyknoten, SCP-Knoten, (10) eine Verbindung mit einem zweiten NF-Knoten (30) eines Diensterzeugers herstellt, wobei das Verfahren vom SCP-Knoten ausgeführt wird und Folgendes umfasst:
• Empfangen (702) einer zweiten Anforderung, die eine nachfolgende Anforderung für den zweiten NF-Knoten (30) zum Bereitstellen eines ersten Diensts (40) ist, wobei die zweite Anforderung Zugriffstokenanforderungsparameter umfasst;
• Erhalten (638) eines gültigen Zugriffstokens unter Verwendung der Zugriffstokenanforderungsparameter aus der zweiten Nachricht,
• Initiieren der Übertragung (708) einer sechsten Anforderung zur Dienstbereitstellung an den zweiten NF-Knoten (30), wobei die sechste Anforderung das gültige Zugriffstoken umfasst,
• Empfangen (710) einer Antwort von dem zweiten NF-Knoten (30) und Initiieren einer Übertragung (712) an den ersten NF (20).

2. Verfahren nach Anspruch 1, ferner umfassend:
• Empfangen (604) einer ersten Anforderung zur Bereitstellung eines ersten Diensts (40) durch den zweiten NF-Knoten (30), wobei die erste Anforderung Erkennungsparameter und Zugriffstokenanforderungsparameter umfasst,
• Erfassen (606, 608) von Profilen von Diensterzeuger-NF-Knoten,
• Erfassen (612, 614) eines Zugriffstokens unter Verwendung der Zugriffstokenparameter aus der ersten Anforderung,
• Auswählen (618) des zweiten NF-Knotens (30) unter Verwendung der erfassten Profile der Diensterzeuger-NF-Knoten,
• Initiieren von Übertragung (624) einer dritten Anforderung für den zweiten NF-Knoten (30) zum Bereitstellen eines Diensts an den zweiten NF-Knoten (30), wobei die dritte Anforderung das erfasste Zugriffstoken umfasst,
• Empfangen (626) einer Antwort von dem zweiten NF-Knoten (30) und Initiieren von Übertragung (628) an den ersten NF (20).

3. Verfahren nach Anspruch 1 oder 2, ferner umfassend durch den ersten SCP-Knoten (10):
• Speichern (610) der Profile der Diensterzeuger-NF-Knoten; und/oder
• Speichern (616) des Zugriffstokens.

4. Verfahren nach Anspruch 1 oder 2, wobei der Schritt des Erfassens von Profilen von Diensterzeuger-NF-Knoten Folgendes umfasst:
• Initiieren der Übertragung (606) einer vierten Anforderung an einen Knoten (60) mit Netzwerk-Repository-Funktion, NRF, unter Verwendung der Erkennungsparameter aus der ersten Anforderung für Profile von Diensterzeuger-NF-Knoten und Empfangen (608) einer ersten Antwort von dem NRF-Knoten (60), oder
• Abrufen von gespeicherten Profilen von Diensterzeuger-NF-Knoten.

5. Verfahren nach Anspruch 1 oder 2, wobei der Schritt des Erfassens von Zugriffstokens Folgendes umfasst:
• Initiieren der Übertragung (612) einer fünften Anforderung für ein Zugriffstoken an den NRF-Knoten unter Verwendung der Zugriffstokenanforderungsparameter aus der ersten Anforderung und Empfangen (614) einer zweiten Antwort von dem NRF-Knoten, die ein Zugriffstoken umfasst, oder
• Abrufen eines gespeicherten Zugriffstokens.

6. Erster SCP-Knoten (10), umfassend:
• mindestens einen Speicher (14) zum Speichern von NF-Profilen, Tokens und Anweisungen, die bei Ausführung durch die Verarbeitungsschaltungsanordnung (12) den ersten SCP-Knoten (10) veranlassen, nach einem der Ansprüche 1-5 zu funktionieren.

7. Computerprogrammprodukt, das auf einem nichttransitorischen maschinenlesbaren Medium enthalten ist und Anweisungen umfasst, die von Verarbeitungsschaltungsanordnung ausgeführt werden können, um die Verarbeitungsschaltungsanordnung zum Durchführen des Verfahrens nach einem der Ansprüche 1 bis 5 zu veranlassen.

8. System, umfassend einen ersten NF-Knoten (20) und einen ersten SCP-Knoten (10), ferner umfassend eine Verarbeitungsschaltungsanordnung, die dazu konfiguriert ist, nach einem der Ansprüche 1-5 zu funktionieren.

## Revendications

1. Procédé de gestion d'une demande de service dans un réseau, dans lequel un premier nœud de fonction de réseau, NF, (20) d'un consommateur de service se connecte à un deuxième nœud NF (30) d'un producteur de service via un premier nœud proxy de communication de service, SCP, (10), le procédé étant réalisé par le nœud SCP, le procédé comprenant :
• la réception (702) d'une deuxième demande qui est une demande ultérieure pour que le deuxième nœud NF (30) fournisse un premier service (40), la deuxième demande comprenant des paramètres de demande de jeton d'accès,
• l'obtention (638) d'un jeton d'accès valide à l'aide des paramètres de demande de jeton d'accès du deuxième message,
• l'initiation (708) d'une transmission au deuxième nœud NF (30) d'une sixième demande de fourniture de service, la sixième demande incluant le jeton d'accès valide,
• la réception (710) d'une réponse du deuxième nœud NF (30), et l'initiation (712) d'une transmission au premier nœud NF (20).

2. Procédé selon la revendication 1, comprenant en outre :
• la réception (604) d'une première demande de fourniture d'un premier service (40) par le deuxième nœud NF (30), la première demande comprenant des paramètres de découverte et des paramètres de demande de jeton d'accès,
• l'acquisition (606, 608) de profils de nœud NF producteur de service,
• l'acquisition (612, 614) d'un jeton d'accès à l'aide des paramètres de jeton d'accès de la première demande,
• la sélection (618) du deuxième nœud NF (30) à l'aide des profils de nœud NF producteur de service acquis,
• l'initiation (624) d'une transmission au deuxième nœud NF (30) d'une troisième demande pour que le deuxième nœud NF (30) fournisse un service, la troisième demande incluant le jeton d'accès acquis,
• la réception (626) d'une réponse du deuxième nœud NF (30) et l'initiation (628) d'une transmission au premier nœud NF (20).

3. Procédé selon la revendication 1 ou 2, comprenant en outre, par le premier nœud SCP (10) :
• le stockage (610) des profils de nœud NF producteur de service ; et/ou
• le stockage (616) du jeton d'accès.

4. Procédé selon la revendication 1 ou 2, dans lequel l'étape d'acquisition de profils de nœud NF producteur de service comprend :
• l'initiation (606) d'une transmission, à un nœud de fonction de référentiel de réseau, NRF, (60), d'une quatrième demande à l'aide des paramètres de découverte de la première demande pour des profils de nœud NF producteur de service, et la réception (608) d'une première réponse du nœud NRF (60), ou
• la récupération de profils de nœud NF producteur de service stockés.

5. Procédé selon l'une quelconque des revendications 1 et 2, dans lequel l'étape d'acquisition de jetons d'accès comprend :
• l'initiation (612) d'une transmission au nœud NRF d'une cinquième demande pour un jeton d'accès à l'aide des paramètres de demande de jeton d'accès de la première demande, et la réception (614) d'une deuxième réponse du nœud NRF comprenant un jeton d'accès, ou
• la récupération d'un jeton d'accès stocké.

6. Premier nœud SCP (10) comprenant :
• au moins une mémoire (14) pour stocker des profils NF, des jetons et des instructions qui, lorsqu'elles sont exécutées par la circuiterie de traitement (12), amènent le premier nœud SCP (10) à fonctionner selon l'une quelconque des revendications 1 à 5.

7. Produit de programme informatique, incorporé sur un support non transitoire lisible par machine, comprenant des instructions qui sont exécutables par une circuiterie de traitement pour amener la circuiterie de traitement à réaliser le procédé selon l'une quelconque des revendications 1 à 5.

8. Système comprenant un premier nœud NF (20) et un premier nœud SCP (10) comprenant en outre une circuiterie de traitement configurée pour fonctionner selon l'une quelconque des revendications 1 à 5.
